# EUROPEAN PATENT APPLICATION

(11) **EP 4 659 874 A1**
(43) Date of publication of application: **10.12.2025**
(21) Application number: 24750139.8
(22) Date of filing: 26.01.2024
(51) Int. Cl.: B09B 3/40, B09B 3/30, B09B 101/15

(54) **SOLAR CELL MODULE RECYCLING SYSTEM**

(30) Priority: 31.01.2023 JP 2023012928
(71) Applicant: TOKUYAMA CORPORATION, Yamaguchi 745-8648 (JP)
(72) Inventor: YAMASHITA Takeharu, Shunan-shi, Yamaguchi 745-8648 (JP)
(74) Representative: Dehns
(86) International application number: PCT/JP2024/002340
(87) International publication number: WO 2024/162190

(57) **Abstract**

To provide a solar cell module recycling system capable of processing a solar cell module having a large panel size and saving fuel consumption.

A solar cell module recycling system for thermally decomposing a used solar cell module, includes: a conveyor on which the solar cell module is placed; a thermal decomposition furnace that thermally decomposes the solar cell module placed on the conveyor; and a filter that is provided in the thermal decomposition furnace and oxidatively decomposes resin melted and dropped from a thermally decomposed solar cell module thermally decomposed. The conveyor is provided so as to penetrate an inside of the thermal decomposition furnace in a conveyance direction, and includes a plurality of through holes that causes the resin to be melted and dropped.

## Description

### Technical Field

The present invention relates to a solar cell module recycling system in which a used solar cell module is thermally decomposed while being placed on a conveyor so as to collect glass and valuable materials.

### Background Art

Toward the realization of a low-carbon society, acceleration of CO2 reduction by utilizing renewable energy such as solar power generation is about to progress. While introduction of the solar power generation has progressed significantly, problems of recycling in disposal of solar cell modules have been pointed out.

The structure of a general solar cell module is formed of three layers including plate glass provided on the front surface of the solar cell module, a sealing resin layer provided inside the solar cell module, and a back sheet provided on the back surface of the solar cell module. In the sealing resin layer, a ribbon wire connecting cells to each other is wired. The sealing resin is required to have properties such as transparency, flexibility, adhesiveness, tensile strength, and weather resistance, and an ethylenevinyl acetate copolymer (hereinafter abbreviated as "EVA") is generally used as the sealing resin, so that the sealing resin serves to bond the plate glass, the cells, and the back sheet to each other by being heated and pressurized.

There has been proposed a technique for recycling a solar cell module, in which the solar cell module is heated by a furnace such as an electric furnace under an oxidizing atmosphere, the EVA is thermally decomposed to remove a sealing material, and a cell section is separated from a glass substrate.

The present applicant has also proposed a processing method of collecting valuable materials from a solar cell module, in which the solar cell module is placed on a porous molded body made of a heat-resistant material supporting a transition metal oxide as a catalyst with the back sheet surface facing downward, the solar cell module is heated in a heating furnace under an oxidizing atmosphere having an oxygen concentration of 15% or more to melt a resin component, and then the resin component is combusted (refer to Patent Literature 1).

### Citation List

### Patent Literature

Patent Literature 1: WO 2020/031661 A

### Summary of Invention

### Technical Problem

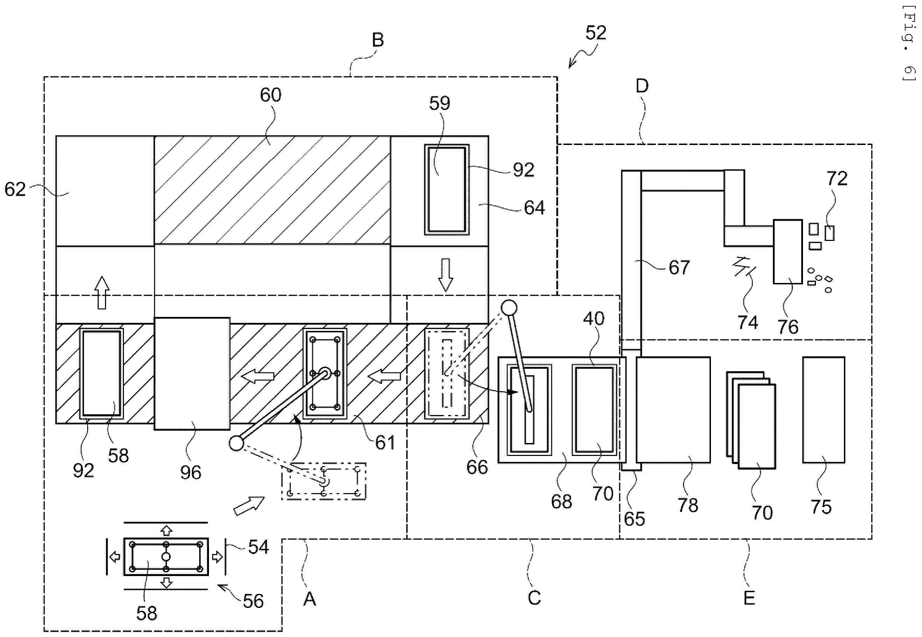

Here, as a recycling system implementing the above-described processing method, for example, a recycling system illustrated in Fig. 6 is known. Fig. 6 is a schematic view illustrating a recycling system 52 in the related art. As illustrated in Fig. 6, the recycling system 52 is roughly divided into a mounting section A, a thermal decomposition section B, a collection section C, a sorting section D, and a cleaning section E.

Among these sections, the mounting section A includes a removal zone 56 for removing a frame 54 and a terminal box (not illustrated) from a solar cell module 58, and a mounting zone 61 for mounting the solar cell module 58 from which the frame 54, for example, is removed. The thermal decomposition section B includes a thermal decomposition furnace 60, a standby zone 62 for introducing the solar cell module 58 into the thermal decomposition furnace 60, and a discharge zone 64 to which a thermally decomposed solar cell module 59 thermally decomposed in the thermal decomposition furnace 60 is discharged.

The collection section C includes a collection zone 66 for collecting a collection net 82 to be described below, and a module collection conveyor 68.

The sorting section D includes a sorter 76 for sorting valuable materials other than a plate glass 70 into cells 72 and a ribbon wire 74. The cleaning section E includes a valuable material collection unit 65 for collecting valuable materials other than the plate glass 70, a glass collection conveyor 78 for collecting the plate glass 70, and a cleaning device 75 for cleaning the collected plate glass 70.

Next, a solar cell module recycling method will be described with reference to the drawings.

First, the used solar cell module 58 carried into a factory is transferred to the removal zone 56, and the frame 54 and the terminal box are removed by a frame removal device (not illustrated).

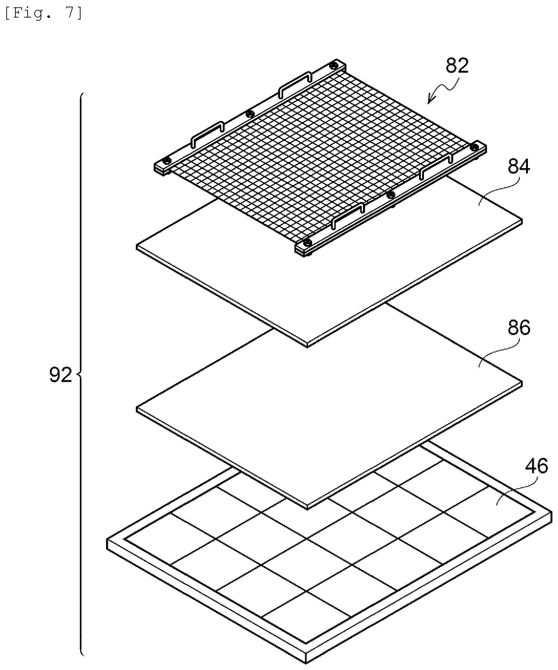

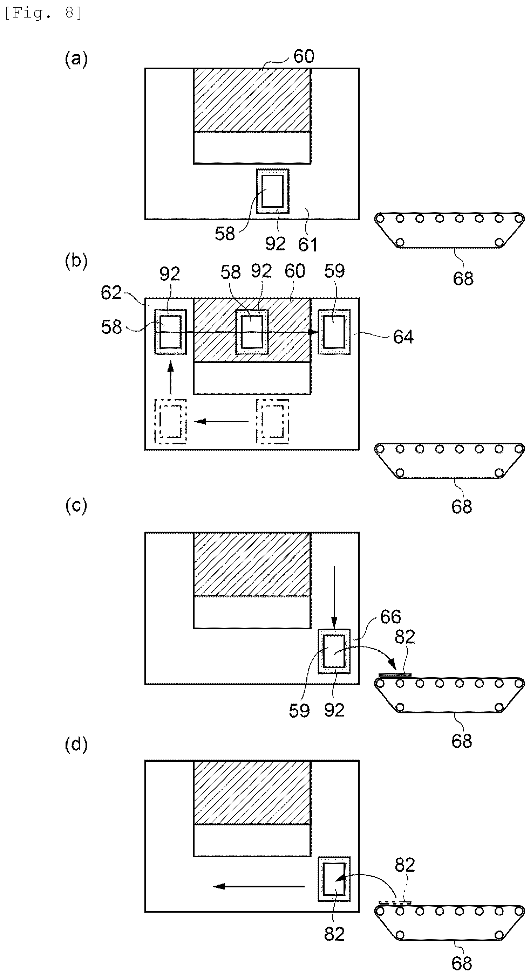

Next, the solar cell module 58 is mounted in the mounting zone 61. Here, in the mounting zone 61, as illustrated in Fig. 7, a substrate 92 formed by stacking the collection net 82, a first filter 84, a second filter 86, and a tray 46 in this order from the upper side is on standby in advance, and the solar cell module 58 is placed on the collection net 82 located at the uppermost layer of the substrate 92 (see Figs. 6 and 8(a)).

Here, a porous molded body having heat resistance is mainly used as the first filter 84. Specific examples of a material thereof include stable and common ceramic materials such as alumina, zirconia, silicon nitride, silicon carbide, cordierite, ferrite, barium titanate, lead zirconate titanate, forsterite, zircon, mullite, steatite, and aluminum nitride.

Further, as the second filter 86, a filter in which a catalyst such as titanium oxide or iron oxide is attached to the first filter 84 is used.

The tray 46 is a member located at the lowermost layer of the substrate 92 and formed to surround a central net-like portion with an outer frame, and is mainly made of iron.

Here, the substrate 92 has a considerable weight or more. For example, assuming a size capable of processing a 72-cell type solar cell module to be described below, the total weight of the first filter 84 and the second filter 86 is generally about 79 Kg, and the weight of the tray 46 is generally about 49 Kg.

The solar cell module 58 placed on the substrate 92 in the mounting zone 61 is kept warm in a heat insulating tank 96, transferred to the standby zone 62 (see Fig. 6), and then introduced into the thermal decomposition furnace 60, as illustrated in Fig. 8(b). The solar cell module 58 introduced into the thermal decomposition furnace 60 is thermally decomposed while being mounted on the substrate 92 (thermal decomposition step).

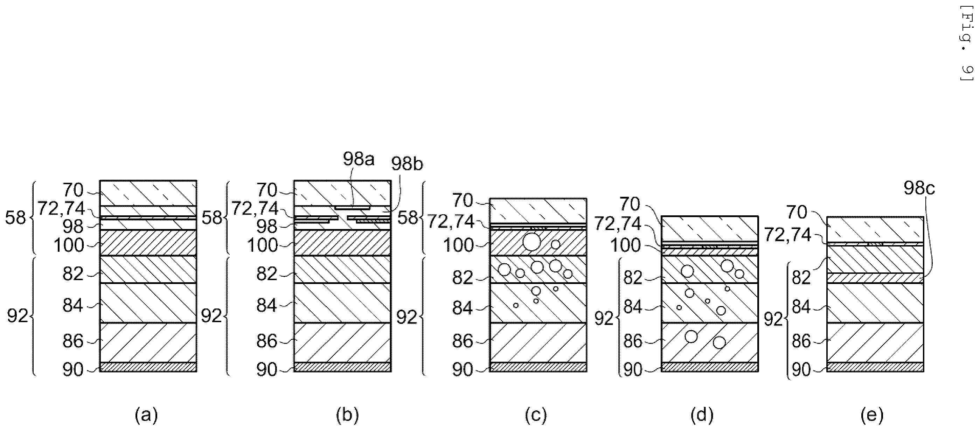

Fig. 9 is a view illustrating a process in which the solar cell module 58 introduced into the thermal decomposition furnace 60 is thermally decomposed. That is, when the solar cell module 58 is introduced into the thermal decomposition furnace 60, from a layer structure in an initial state illustrated in Fig. 9(a), sealing resin of a sealing resin layer 98 is thermally decomposed and an acetic acid gas 98a and a polyethylene (PE) 98b are discharged from the sealing resin as illustrated in Fig. 9(b).

Next, the sealing resin is melted as illustrated in Fig. 9(c), and subsequently, a back sheet 100 is melted as illustrated in Fig. 9(d). When the thermal decomposition is completed, only the collection net 82, the plate glass 70, the cells 72, and the ribbon wire 74 are left on the first filter 84 in addition to a white pigment 98c mixed in the sealing resin as illustrated in Fig. 9(e). Note that, in the thermal decomposition furnace 60, three solar cell modules 58 can be thermally decomposed at once.

Next, the thermally decomposed solar cell module 59 thermally decomposed is discharged to the discharge zone 64 as illustrated in Fig. 8(b), and then transferred to the collection zone 66 and transferred to (collected onto) the module collection conveyor 68 as illustrated in Fig. 8(c). The thermally decomposed solar cell module 59 is transferred to the module collection conveyor 68 in a state of being placed on the collection net 82 located at the uppermost layer of the substrate 92. In the collection zone 66, the substrate 92 including the first filter 84 and components disposed under the first filter 84 stands by as it is without the collection net 82 (refer to Figs. 8(c) and 8(d)).

The thermally decomposed solar cell module 59 transferred to the module collection conveyor 68 is naturally cooled on a conveyor belt, then slid onto the glass collection conveyor 78 as it is, and then collected (glass collection step, see Fig. 6).

On the other hand, the cells 72 and the ribbon wire 74 included in the thermally decomposed solar cell module 59 fall from the module collection conveyor 68 and are collected by the valuable material collection unit 65 (valuable material collection step). The cells 72 and the ribbon wire 74 collected by the valuable material collection unit 65 are conveyed to the sorter 76 by a valuable material conveyor 67, sorted into the cells 72 and the ribbon wire 74, and recycled as valuable materials.

The plate glass 70 is recycled as a material of, for example, a new plate glass after the attached substances such as organic substances and metals are removed by the cleaning device 75 (cleaning step). The above-described recycling system 52 in the related art is mainly used to recycle non-large solar cell modules 58 for the mega solar industry. Here, in the recycling system 52 in the related art, the size of the substrate 92 (the collection net 82, the first filter 84, the second filter 86, and the tray 46) is determined such that the solar cell module 58 to be thermally decomposed in the thermal decomposition furnace 60 can be mounted.

For this reason, when the solar cell module 58 having a size larger than the determined size is to be mounted, the solar cell module 58 does not fit in the substrate 92, and there is a possibility that the thermal decomposition of resin cannot be appropriately performed. In addition, since the width of the thermal decomposition furnace 60 is usually designed to fit the tray 46, the thermal decomposition furnace 60 needs to be newly redesigned in order to thermally decompose the solar cell module 58 having a large panel size.

That is, the recycling system 52 in the related art cannot process the solar cell module 58 larger than the initially assumed solar cell module 58 because such a larger solar cell module 58 cannot be thermally decomposed in the thermal decomposition furnace 60, and the frame 54 needs to be manually removed, which is a problem.

In addition, there is a problem in that fuel consumption is wasteful in the thermal decomposition step. Specifically, the temperature required to thermally decompose the solar cell module 58 is 450°C. For example, in thermally decomposing a 60-cell type solar cell module 58 having a size of 1665 mm × 990 mm, the energy required to thermally decompose the solar cell module 58 itself is about 6.5 MJ, whereas the energy required to raise the temperatures of the first filter 84, the second filter 86, and the tray 46 on which the solar cell module is mounted is about 17 MJ. That is, in the thermal decomposition step, about 70% of the total energy is used to raise the temperatures of the first filter 84, the second filter 86, and the tray 46.

According to the above, it can be seen that in the recycling system 52 in the related art, the first filter 84, the second filter 86, and the tray 46 greatly restrict the panel size and the fuel consumption reduction of the solar cell module 58.

An object of the present invention is to provide a solar cell module recycling system capable of processing a solar cell module having a large panel size and saving fuel consumption.

### Solution to Problem

A solar cell module recycling system of the present invention is a solar cell module recycling system for thermally decomposing a used solar cell module, and includes:
a conveyor on which the solar cell module is placed; a thermal decomposition furnace that thermally decomposes the solar cell module placed on the conveyor; and
a filter that is provided in the thermal decomposition furnace and oxidatively decomposes resin melted and dropped from a thermally decomposed solar cell module which is thermally decomposed,
at least the conveyor being provided to penetrate an inside of the thermal decomposition furnace in a conveyance direction, and includes a plurality of through holes for causing the resin to be melted and dropped.

In this way, by providing the filter in the thermal decomposition furnace, it is possible to save the energy required to raise the temperature of the substrate again which has been lowered in temperature by being exposed to outside air after the solar cell module is thermally decomposed as in the related art. In addition, since it is not necessary to place the solar cell module on the substrate as in the related art, the restriction on the panel size is greatly relaxed. Therefore, it is possible to provide a solar cell module recycling system capable of processing a solar cell module having a large panel size and saving fuel consumption.

The solar cell module recycling system of the present invention is also characterized in that the filter is provided immediately below an upper belt of the conveyor in the thermal decomposition furnace.

In this way, by disposing the filter immediately below the upper belt of the conveyor, it is possible to appropriately oxidatively decompose the resin melted and dropped from the thermally decomposed solar cell module which is thermally decomposed without being spilled.

The solar cell module recycling system of the present invention further includes an adjustment mechanism that changes a distance between the filter and the conveyor.

Accordingly, for example, the radiation heat of the filter and the amount of airflow passing between the solar cell module and the filter are optimized, and thus the temperature rise of the solar cell module can be promoted quickly.

The solar cell module recycling system of the present invention is also characterized in that a width of the filter is 110% or more and 130% or less of a length of the solar cell module in a conveyance direction.

Accordingly, the resin melted and dropped from the thermally decomposed solar cell module can be appropriately oxidatively decomposed without being spilled.

The solar cell module recycling system of the present invention is also characterized in that a length of the filter is 420% or more and 600% or less of a width of the solar cell module.

Accordingly, a plurality of solar cell modules can be thermally decomposed in a thermal decomposition chamber in a state of being placed on the conveyor.

The solar cell module recycling system of the present invention is also characterized in that the through holes are formed as spaces surrounded by a mesh-like wire, or extend in a slit shape at predetermined intervals orthogonal to a movement direction of the conveyor.

In this way, by providing the through holes in the conveyor, it is possible to cause the resin to be directly melted and dropped onto the filter in the thermal decomposition furnace.

The solar cell module recycling system of the present invention is also characterized in that the filter is formed by stacking a first filter made of a ceramic material and a second filter in which a catalyst is attached to the ceramic material.

Accordingly, it is possible to directly oxidatively decompose the resin melted and dropped into the filter in the thermal decomposition furnace.

The solar cell module recycling system of the present invention further includes a removal device that is located upstream of the conveyor, turnable in a horizontal direction, and configured to remove a frame and a terminal box from the solar cell module.

Accordingly, it is possible to easily transfer the solar cell module larger than an initially assumed solar cell module onto the conveyor.

### Advantageous Effects of Invention

According to the present invention, it is possible to provide a solar cell module recycling system capable of processing a solar cell module having a large panel size and saving fuel consumption.

### Brief Description of Drawings

Fig. 1 is a schematic view illustrating a solar cell module according to an embodiment.
Fig. 2 is a schematic view illustrating a solar cell module recycling system according to the embodiment.
Fig. 3 is a view illustrating an elevational cross-section of a thermal decomposition furnace according to the embodiment.
Fig. 4 is a perspective view of a conveyor according to the embodiment as viewed from above.
Fig. 5 is a schematic view illustrating a solar cell module recycling system according to another embodiment.
Fig. 6 is a schematic view illustrating a solar cell module recycling system in the related art.
Fig. 7 is a schematic view illustrating a layer structure of a substrate in the related art.
Fig. 8 is a schematic view illustrating a flow of a solar cell module recycling method in the related art.
Fig. 9 is a schematic view illustrating a process in which a solar cell module is decomposed in a thermal decomposition furnace in the related art.

### Description of Embodiments

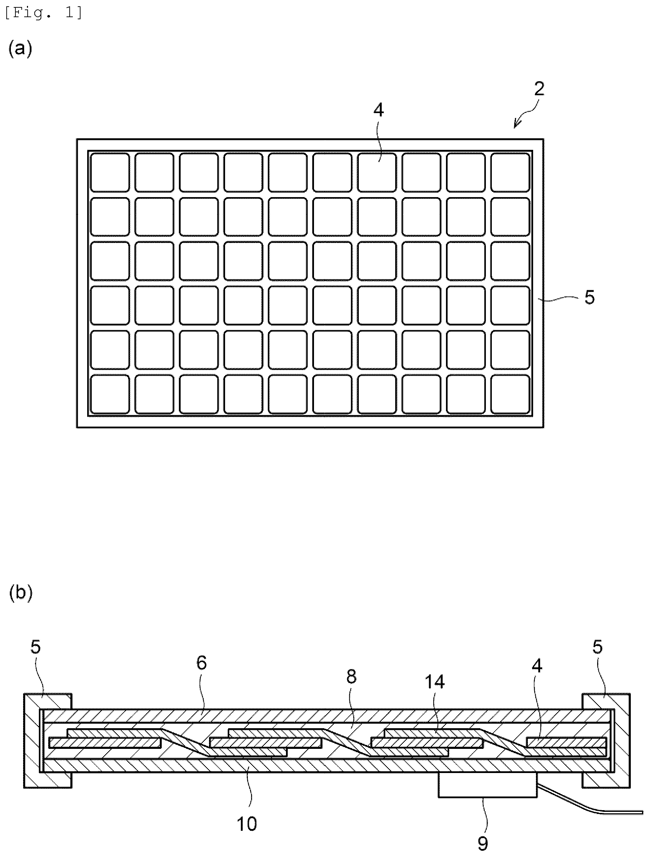

Hereinafter, a solar cell module recycling system (hereinafter, abbreviated as a recycling system) according to an embodiment of the present invention will be described with reference to the drawings. Fig. 1(a) is a schematic view illustrating a solar cell module according to the embodiment as viewed from above, and Fig. 1(b) is a schematic view illustrating the cross section thereof.

As illustrated in Fig. 1(a), a solar cell module 2 has a rectangular shape, cells (solar cell elements) 4 are disposed in a matrix configuration in the solar cell module 2, and a frame 5 is disposed as an outer frame of the solar cell module 2. An aluminum frame is mainly used as the frame 5. Further, as illustrated in Fig. 1(b), the solar cell module 2 is formed by stacking three layers including a plate glass 6, a sealing resin layer 8, and a back sheet 10 from the upper side, and is provided with a terminal box 9 attached to a lower portion thereof and configured to supply power generated by the cells 4 to a storage battery (not illustrated), for example. Note that EVA is generally used as a sealing resin, and polyethylene terephthalate (PET) is generally used for the back sheet 10.

In the sealing resin layer 8, the cells 4 and a ribbon wire 14 connecting the cells 4 to each other are sealed, and in the sealing resin layer 8, the sealing resin, the cells 4, and the ribbon wire 14 are integrally and firmly bonded. Therefore, it is extremely difficult to decompose the solar cell module 2 as it is and separate the plate glass 6 (tempered glass), the cells 4, and the ribbon wire 14.

Note that as the solar cell module 2 applicable to the present invention, any solar cell module can be used as long as the solar cell module includes a back sheet made of resin. Specific examples thereof include monocrystalline silicon solar cells, polycrystalline silicon solar cells, amorphous silicon solar cells, heterojunction solar cells, CIS solar cells, CIGS solar cells, and CdTe solar cells.

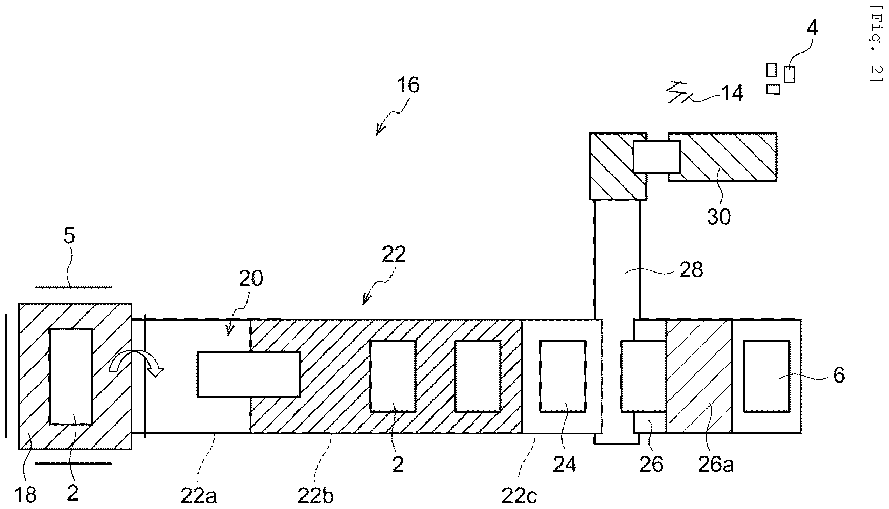

Fig. 2 is a schematic view illustrating a plane of a recycling system 16 according to the embodiment. As illustrated in Fig. 2, the recycling system 16 includes, for example, a removal device 18 for removing the frame 5 and the terminal box 9 (see Fig. 1), a conveyor 20 on which the solar cell module 2 is placed and conveyed, a thermal decomposition furnace 22 that thermally decomposes the solar cell module 2 placed on the conveyor 20, a glass collection conveyor 26 that collects the plate glass 6 from a thermally decomposed solar cell module 24 thermally decomposed in the thermal decomposition furnace 22, a valuable material collection unit 28 that collects valuable materials other than the plate glass 6, and a sorter 30 that sorts the valuable materials other than the plate glass 6 from the thermally decomposed solar cell module 24 into the cells 4 and the ribbon wire 14.

Note that, in placing the solar cell module 2 on the conveyor 20, in order to make it possible to place and thermally decompose a plurality of solar cell modules 2 at a time, it is desirable to place the solar cell module 2 such that the width direction of the conveyor 20 and the thermal decomposition furnace 22 is parallel to the longitudinal direction of the solar cell module 2 (the longitudinal direction of the solar cell module 2 is orthogonal to the conveyance direction of the conveyor 20 and the thermal decomposition furnace 22).

Here, the removal device 18 is turnable in the horizontal direction, so that, for example, the solar cell module 2 larger than that assumed can be easily conveyed to the thermal decomposition furnace 22 by turning the removal device 18 by 90°. Note that the removal device 18 itself does not necessarily need to be turnable, and the removal device 18 may include a turning device separately. In that case, the solar cell module 2 is turned by the turning device after the frame 5 and the terminal box 9 are removed by the removal device 18.

In addition, Fig. 2 illustrates a case in which the solar cell modules 2 having a large size and the solar cell modules 2 having a normal panel size are mixed and placed on the conveyor 20.

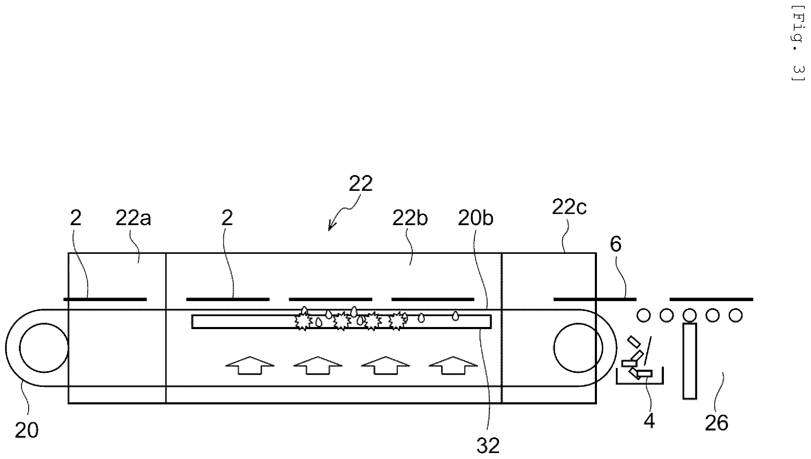

Fig. 3 is a view illustrating an elevational cross-section of the thermal decomposition furnace 22. As illustrated in Fig. 3, the thermal decomposition furnace 22 includes a front chamber 22a for introducing the solar cell module 2 into the thermal decomposition furnace 22, a thermal decomposition chamber 22b including a heating burner (not illustrated) to thermally decompose the solar cell module 2, and a rear chamber 22c to which the thermally decomposed solar cell module 24 (see Fig. 1) thermally decomposed in the thermal decomposition chamber 22b is discharged. The conveyor 20 penetrates the inside of the thermal decomposition furnace 22 in the conveyance direction. Note that the front chamber 22a, the thermal decomposition chamber 22b, and the rear chamber 22c may be provided by dividing the conveyor 20 itself. This makes it possible to more appropriately secure the sealing of thermal decomposition chamber 22b.

In the thermal decomposition chamber 22b, a filter 32 that oxidatively decomposes the resin melted and dropped from the thermally decomposed solar cell module 24 is provided immediately below an upper belt 20b of the conveyor 20.

Here, an adjustment mechanism (not illustrated) that changes and adjusts the distance between the filter 32 and the conveyor 20 may be provided between the filter 32 and the conveyor 20. Accordingly, for example, the radiation heat of the filter and the amount of airflow passing between the solar cell module and the filter can be optimized, and thus the temperature rise of the solar cell module can be promoted quickly.

The filter 32 is formed by stacking a first filter (not illustrated) made of a ceramic material and a second filter (not illustrated) in which a catalyst is attached to the ceramic material. Note that the filter 32 may include only the first filter or only the second filter in order to reduce the cost.

Preferably, the front chamber 22a and the rear chamber 22c have a structure in which the solar cell module 2 can be introduced into the thermal decomposition chamber 22b in a state of being shielded from outside air when the solar cell module 2 is introduced into the thermal decomposition chamber 22b.

Specifically, a structure in which the front chamber 22a and the thermal decomposition chamber 22b, and the thermal decomposition chamber 22b and the rear chamber 22c are respectively shielded from the outside air by, for example, a double door structure is conceivable. This makes it possible to prevent leakage of smoke or gas in the thermal decomposition chamber 22b and to prevent a temperature decrease in the thermal decomposition chamber 22b due to inflow of the outside air.

Further, the rear chamber 22c preferably includes a cooling space or a cooling device (not illustrated) for gradually cooling the thermally decomposed solar cell module. Accordingly, when the thermally decomposed solar cell module 24 moves to the outside of the rear chamber 22c and is exposed to the outside air, the plate glass 6 can be prevented from being broken due to rapid cooling.

When the solar cell module 2 is placed such that the width direction of the conveyor 20 and the thermal decomposition furnace 22 is parallel to the longitudinal direction of the solar cell module 2, the width of the filter 32 provided in the thermal decomposition chamber 22b (the length in a direction orthogonal to the conveyance direction of the solar cell module 2) is preferably 110% or more and 130% or less of the length in the conveyance direction of the solar cell module to be subjected to the thermal decomposition process. For example, when the size of the solar cell module is 1000 mm × 2000 mm, specifically, the width is preferably 2200 mm or more and 2600 mm or less. Accordingly, the resin melted and dropped from the thermally decomposed solar cell module 24 can be appropriately oxidatively decomposed without being spilled.

In addition, the length of the filter 32 (the length in the conveyance direction of the solar cell module 2) is preferably 420% or more and 600% or less of the width of the solar cell module to be subjected to the thermal decomposition process on the assumption that three solar cell modules can be arranged with gaps and processed. Specifically, the length is preferably 4200 mm or more and 6000 mm or less. Accordingly, a plurality of solar cell modules 2 can be thermally decomposed in the thermal decomposition chamber 22b in a state of being placed on the conveyor 20.

Here, a porous molded body having heat resistance is mainly used as the first filter. Specific examples of a material thereof include stable and common ceramic materials such as alumina, zirconia, silicon nitride, silicon carbide, cordierite, ferrite, barium titanate, lead zirconate titanate, forsterite, zircon, mullite, steatite, and aluminum nitride.

Further, as the second filter, a filter in which a catalyst such as titanium oxide or iron oxide is attached to the first filter is used.

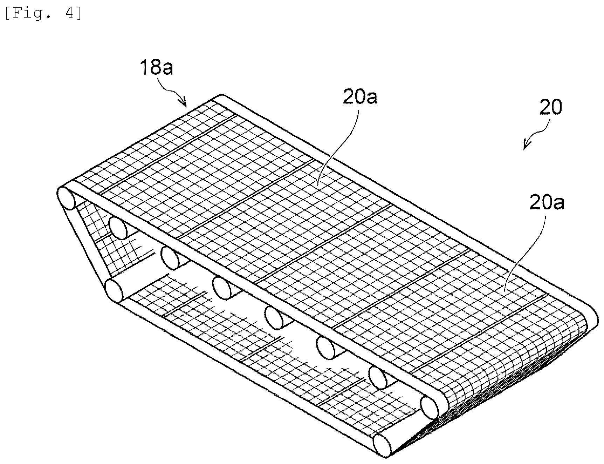

Fig. 4 is a perspective view of the conveyor 20 as viewed from above. As illustrated in Fig. 4, the conveyor 20 is formed with a plurality of through holes 20a which are spaces surrounded by a mesh-like wire. Accordingly, the solar cell module 2 can be thermally decomposed while being placed on the conveyor 20, and the resin can be directly melted and dropped onto the filter 32.

The through holes 20a are not necessarily spaces surrounded by a mesh-like wire, and may extend in a slit shape at predetermined intervals between bar members provided orthogonal to the movement direction of the conveyor 20. That is, any shape is sufficient as long as the resin can be melted and dropped while the thermally decomposed solar cell module 24 is placed. For this reason, various types such as a wire net conveyor, a wire mesh conveyor, and a mesh screen conveyor are conceivable as the conveyor 20.

Next, a solar cell module recycling method according to the embodiment of the present invention will be described with reference to the drawings.

First, the used solar cell module 2 carried into a factory is transferred to the removal device 18, and the frame 5 and the terminal box 9 are removed. Here, when the solar cell module 2 has a large size, the removal device 18 is turned by 90°, so that the width of the solar cell module 2 transferred to the conveyor 20 fits in the width of the filter 32 without difficulty, and the solar cell module 2 having a large size can be thermally decomposed.

The solar cell module 2 transferred to the conveyor 20 is first conveyed to the front chamber 22a, and then fed into the thermal decomposition chamber 22b.

After the solar cell module 2 is fed into the thermal decomposition chamber 22b, the sealing resin of the sealing resin layer 8 is thermally decomposed, and acetic acid gas and polyethylene (PE) are discharged from the sealing resin (see Fig. 9). Thereafter, the sealing resin is melted, subsequently the back sheet 10 is melted, and the melted resin is melted and dropped onto the filter 32 through the through holes 20a.

The resin melted and dropped on the filter 32 reacts with oxygen in the atmosphere in the pores of the first filter of the filter 32 or reacts with oxygen adsorbed to the catalyst in the catalyst of the second filter to be oxidatively decomposed as it is. Here, the gas in the thermal decomposition chamber 22b is heated by thermal energy generated when the resin is oxidatively decomposed.

Accordingly, since the thermal decomposition chamber 22b itself is effectively used as a heat source for thermally decomposing the solar cell module 2, the fuel of the heating burner can be reduced.

When the thermal decomposition is completed, the white pigment mixed in the sealing resin remains on the filter 32, the thermally decomposed solar cell module 24 including only the plate glass 6, the cells 4, and the ribbon wire 14 remains on the conveyor 20, and the thermally decomposed solar cell module 24 is discharged to the rear chamber 22c. In the rear chamber 22c, the plate glass 6 is cooled in a cooling space or by a cooling device to a temperature at which the plate glass 6 is not broken by being exposed to outside air.

The plate glass 6 is slid onto the glass collection conveyor 26 as it is and collected (glass collection step), and is recycled as a material of a new plate glass after the attached substances such as organic substances and metals are removed by the cleaning device 26a (cleaning step).

On the other hand, the cells 4 and the ribbon wire 14 included in the thermally decomposed solar cell module 24 fall from the conveyor 20 and are collected by the valuable material collection unit 28 (valuable material collection step). The cells 4 and the ribbon wire 14 collected by the valuable material collection unit 28 are conveyed to the sorter 30, sorted into the cells 4 and the ribbon wire 14, and recycled as valuable materials.

When the solar cell module with a glass broken from the beginning is processed by thermal decomposition, the processed glass is crushed into particles of about 10 mm. In this case, the cells 4, the ribbon wire 14, and the broken glass are mixed, and the cells 4, the ribbon wire 14, and the broken glass are sorted by the sorter 30 to be recycled as valuable materials or recycled materials.

According to the present embodiment of the invention, by providing the filter 32 in the thermal decomposition furnace 22, it is possible to save the energy required to raise the temperature of the substrate 92 (see Fig. 7) again which has been lowered in temperature by being exposed to outside air after the solar cell module 2 is thermally decomposed as in the related art. In addition, since it is not necessary to place the solar cell module 2 on the substrate 92 as in the related art, the restriction on the panel size is greatly relaxed.

Therefore, it is possible to provide a solar cell module recycling system capable of processing a solar cell module having a large panel size and saving fuel consumption.

In addition, by providing the filter 32 in the thermal decomposition chamber 22b, the gas circulating in the thermal decomposition chamber 22b is heated by thermal energy generated when the resin is oxidatively decomposed, and thus the thermal decomposition chamber 22b itself is effectively used as a heat source for thermally decomposing the solar cell module 2, so that the fuel of the heating burner can be reduced.

Further, by providing the removal device 18 turnable in the horizontal direction, the solar cell module 2 having a large size that does not fit in the width of the thermal decomposition chamber 22b can be transferred to the conveyor 20.

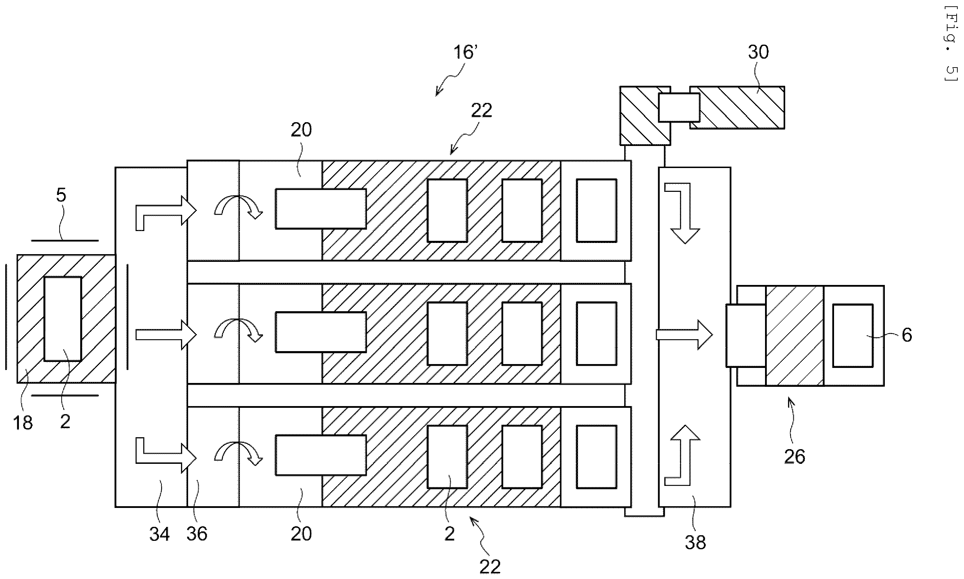

According to the present embodiment of the invention, since the mounting section A and the collection section C (see Fig. 6), which are necessary for the recycling system in the related art, are not required, it is also possible to obtain a recycling system 16' including a plurality of lines of the thermal decomposition furnaces 22 as illustrated in Fig. 5. In this case, the removal device 18 is not turned, and a distribution unit 34 that distributes the solar cell modules 2 from which the frame 5 and the terminal box 9 have been removed by the removal device 18 to respective lanes, and turning devices 36 that turn the solar cell modules 2 subjected to the distribution unit 34 are provided. The solar cell modules 2 turned by the turning devices 36 are fed to the conveyors 20 of the respective lanes. Then, the plate glasses 6 slid from the thermally decomposed solar cell modules 24 carried out from the thermal decomposition furnaces 22 of the respective lanes are aggregated at the position of the glass collection conveyor 26 by a glass conveyance unit 38 to be conveyed to the glass collection conveyor 26.

Note that Fig. 5 illustrates a case in which the solar cell modules 2 having a large size and the solar cell modules 2 having a normal panel size are mixed and placed on the conveyors 20.

Further, according to the present embodiment of the invention, the mounting section A and the collection section C (see Fig. 6), which are necessary for the recycling system in the related art, are not required, and the solar cell module 2 does not need to be placed on the substrate 92 (see Fig. 7). Accordingly, the collection net 82 and the tray 46 are also not required, and the first filters 84 and the second filters 86 required as many as the number of trays are replaced by the filter 32 disposed in the thermal decomposition chamber 22b, so that the cost required for processing the solar cell module 2 can be significantly reduced.

### Reference Signs List

- 2: Solar cell module
- 4: Cell
- 5: Frame
- 6: Plate glass
- 8: Sealing resin layer
- 9: Terminal box
- 10: Back sheet
- 14: Ribbon wire
- 16: Recycling system
- 18: Removal device
- 20: Conveyor
- 20a: Through hole
- 20b: Upper belt
- 22: Thermal decomposition furnace
- 22a: Front chamber
- 22b: Thermal decomposition chamber
- 22c: Rear chamber
- 24: Thermally decomposed solar cell module
- 26: Glass collection conveyor
- 26a: Cleaning device
- 28: Valuable material collection unit
- 30: Sorter
- 32: Filter
- 34: Distribution unit
- 36: Turning device
- 38: Glass conveyance unit
- 46: Tray
- 52: Recycling system
- 54: Frame
- 56: Removal zone
- 58: Solar cell module
- 59: Thermally decomposed solar cell module
- 60: Thermal decomposition furnace
- 61: Mounting zone
- 62: Standby zone
- 64: Discharge zone
- 65: Valuable material collection unit
- 66: Collection zone
- 67: Valuable material conveyor
- 68: Module collection conveyor
- 70: Plate glass
- 72: Cell
- 74: Ribbon wire
- 75: Cleaning device
- 76: Sorter
- 78: Glass collection conveyor
- 82: Collection net
- 84: First filter
- 86: Second filter
- 92: Substrate
- 96: Heat insulating tank
- 98: Sealing resin layer
- 98a: Acetic acid gas
- 98c: White pigment
- 100: Back sheet
- A: Mounting section
- B: Thermal decomposition section
- C: Collection section
- D: Sorting section
- E: Cleaning section

## Claims

1. A solar cell module recycling system for thermally decomposing a used solar cell module, the solar cell module recycling system comprising:
a conveyor on which the solar cell module is placed;
a thermal decomposition furnace configured to thermally decompose the solar cell module placed on the conveyor; and
a filter provided in the thermal decomposition furnace and configured to oxidatively decompose resin melted and dropped from a thermally decomposed solar cell module which is thermally decomposed,
at least the conveyor being provided to penetrate an inside of the thermal decomposition furnace in a conveyance direction, and including a plurality of through holes that causes the resin to be melted and dropped.

2. The solar cell module recycling system according to claim 1, wherein the filter is provided immediately below an upper belt of the conveyor in the thermal decomposition furnace.

3. The solar cell module recycling system according to claim 2, further comprising an adjustment mechanism configured to change a distance between the filter and the conveyor.

4. The solar cell module recycling system according to any one of claims 1 to 3, wherein a width of the filter is 110% or more and 130% or less of a length of the solar cell module in a conveyance direction.

5. The solar cell module recycling system according to any one of claims 1 to 3, wherein a length of the filter is 420% or more and 600% or less of a width of the solar cell module.

6. The solar cell module recycling system according to claim 1, wherein the through holes are formed as spaces surrounded by a mesh-like wire, or extend in a slit shape at predetermined intervals orthogonal to a movement direction of the conveyor.

7. The solar cell module recycling system according to claim 1, wherein the filter is formed by stacking a first filter made of a ceramic material and a second filter in which a catalyst is attached to the ceramic material.

8. The solar cell module recycling system according to claim 1, further comprising a removal device located upstream of the conveyor, turnable in a horizontal direction, and configured to remove a frame and a terminal box from the solar cell module.
